# FASCICULE DE BREVET EUROPEEN

(11) **EP 0 807 780 B1**
(45) Date de publication et mention de la délivrance du brevet: **20.03.2002**
(21) Numéro de dépôt: 97401049.8
(22) Date de dépôt: 12.05.1997
(51) Int. Cl.: F16L 21/00, F16L 21/06

(54) **Dispositif d'accouplement étanche de deux tubes lisses**
Vorrichtung zum dichten Verbinden von zwei glatten Rohren
Device for sealingly connecting two flat pipes

(30) Priorité: 13.05.1996 FR 9605905
(43) Date de publication de la demande: 19.11.1997
(73) Titulaire: Etablissements CAILLAU, 92130 Issy-les-Moulineaux (FR)
(72) Inventeur: Détable, Pascal, Villedieu 41130 Gièvres (FR); André, Michel, 41200 Romorantin (FR)
(74) Mandataire: Hasenrader, Hubert

(56) Documents cités:
- DE-U- 9 207 960
- FR-A- 2 139 899
- FR-A- 2 689 204
- US-A- 2 227 551

## Description

La présente invention concerne un dispositif d'accouplement étanche de deux tubes lisses disposés bout à bout, ayant sensiblement le même diamètre.

On connaît déjà, par le document FR-A-2 662 486, un dispositif selon le preambule de la revendication 1.

Des dispositifs de ce type servent par exemple au raccord bout à bout de deux tubes d'échappement. Les exigences en matière d'étanchéité du raccord sont de plus en plus grandes. On a naturellement tendance à penser que plus on serre le manchon sur les tubes, plus l'étanchéité est améliorée. Le problème est que, lorsque l'on serre le manchon, on diminue le diamètre de la bague d'étanchéité, ce qui rapproche ces deux bords libres l'un de l'autre. Il faut donc que la jonction entre les deux bords libres soit aussi étanche que possible et que le fait de serrer davantage le manchon à partir du moment où les deux bords libres sont en contact n'occasionne pas de chevauchement nuisible à l'étanchéité.

Le document FR-A-2 662 486 propose une première solution à ce problème en réalisant les bords libres de la bague en biseau, de telle sorte que ceux-ci peuvent être appliqués l'un contre l'autre et se décaler transversalement l'un par rapport à lorsque le diamètre de la bague diminue. Cette solution est globalement satisfaisante, mais elle ne permet pas de maîtriser totalement l'appui des deux bords libres l'un contre l'autre ni d'assurer le calage de la bague à l'intérieur du manchon.

De plus, en raison des tolérances de fabrication, il arrive que les diamètres des deux tubes lisses que l'on raccorde soient très légèrement différents. Il faut donc que la bague puisse s'adapter à cette légère différence de diamètre, ce qui n'est pas le cas dans la solution citée précédemment.

Le document FR-A-2 689 204 montre un dispositif dans lequel la bague d'étanchéité présente des bords libres conformés de manière à s'emboîter en chicane. Plus précisément, un bord libre présente au moins une encoche axiale, tandis que l'autre bord libre présente au moins une languette axiale de forme complémentaire. Lorsque la languette est insérée dans l'encoche, il y a peut-être un contact entre les bords de la languette et ceux de l'encoche mais, même en serrant la manchon, on ne peut pas assurer un effort d'appui entre la languette et l'encoche, Les zones de contact sont très localisées et peu sûres du point de vue de l'étanchéité.

La présente invention a pour but d'améliorer encore le dispositif d'accouplement et de remédier aux inconvénients précités.

Ce but est atteint par les caractéristiques de la partie caractérisante de la revendication 1.

Grâce à cette conformation, les bords libres transversaux de la bague d'étanchéité sont automatiquement appliqués l'un contre l'autre lorsque l'on serre le manchon. De plus, lorsque l'on continue de serrer le manchon, la longueur de la bande qui constitue la bague peut diminuer dans la région déformable, de telle sorte que le diamètre de cette bague peut diminuer sans chevauchement de ses bords libres. Par ailleurs, la région déformable s'étendant sur sensiblement la totalité la largeur de la bande, cette dernière peut s'adapter à de légères différences de diamètre des deux tubes à raccorder, puisque la longueur de la bande peut être plus grande dans une partie de la région déformable que dans une autre.

De manière avantageuse, le dispositif comporte des moyens pour emprisonner les fuites susceptibles de se produire dans la zone d'accouplement des extrémités des tubes entre au moins une portion de la région déformable de la bague et l'un des deux éléments constitués par la périphérie interne du manchon et par les périphéries externes des tubes.

Les moyens pour provoquer une déformation dans la région déformable peuvent comprendre une série de perforations ou, en variante, une série de portions amincies.

La bague d'étanchéité présente avantageusement un jonc d'étanchéité qui fait saillie vers l'intérieur de cette bague est apte à coopérer avec les périphéries externes des tubes. De préférence, ce jonc est constitué par un repli de la bordure de la bague vers l'intérieur.

L'invention sera bien comprise et ses avantages apparaîtront mieux à la lecture de la description détaillée qui suit, de modes de réalisation représentés à titre d'exemples non limitatifs.

La description se réfère aux dessins annexés, sur lesquels :
- la figure 1 est une vue de côté du dispositif, sans les tubes susceptibles d'être disposés à l'intérieur, avec une loupe montrant un détail,
- la figure 2 est une vue en élévation extérieure du manchon, selon la flèche II de la figure 1,
- la figure 3 est une vue en élévation de la bande qui constitue la bague, cette bande étant représentée à plat,
- la figure 4 est une vue de dessus de la figure 3,
- la figure 5 est une coupe selon la ligne V-V de la figure 3,
- la figure 6 est une vue partielle en coupe dans le plan transversal médian du dispositif, montrant le détail VI de la figure 1,
- la figure 7 est une vue partielle de dessus de la bande montrant une variante, et
- la figure 8 est une vue en coupe selon la ligne VIII-VIII de la figure 7.

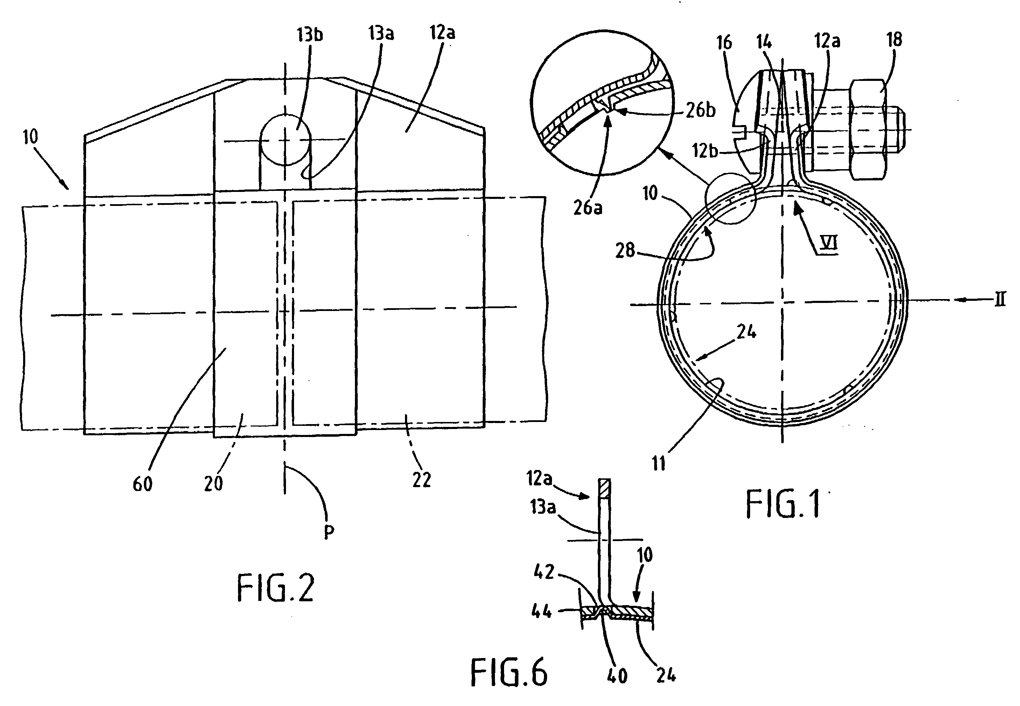

En se reportant tout d'abord aux figures 1 et 2, on voit que le dispositif comporte un manchon 10 dont deux extrémités libres, qui s'étendent sensiblement axialement, sont pourvues de lèvres d'assemblage 12a et 12b. Ces lèvres délimitent entre elles une fente axiale 14 qui, comme le montre la figure 1, tend à se refermer lorsque l'on serre le manchon. Les lèvres 12a et 12b coopèrent en effet avec des moyens de serrage du manchon qui les rapprochent l'une de l'autre. Dans l'exemple représenté, ces moyens de serrage comportent un boulon comprenant une vis 16 dont la tige passe à travers deux orifices 13a et 13b respectivement ménagés dans les lèvres 12a et 12b, et un écrou 18 vissé sur cette tige.

Le dispositif, qui sert à raccorder deux tubes ayant sensiblement le même diamètre, peut être disposé autour des extrémités en regard de ces deux tubes, extrémités représentées en traits mixtes interrompus sur la figure 2 et respectivement désignées par les références 20 et 22.

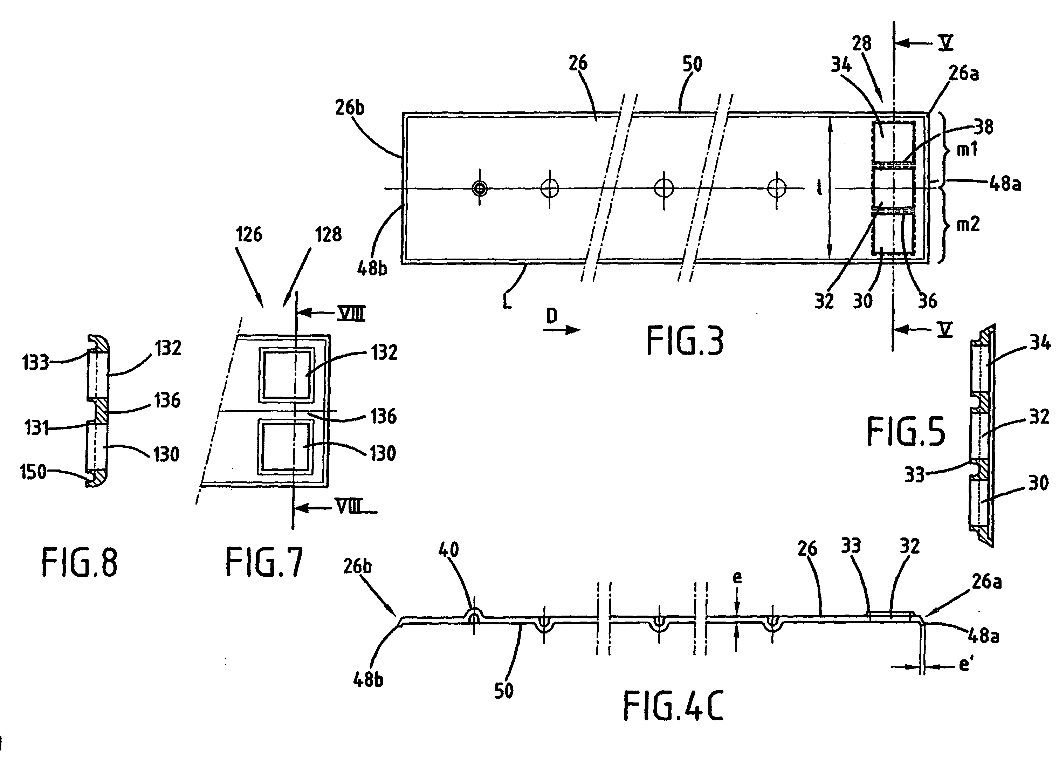

Le dispositif comprend, en outre, une bague d'étanchéité 24 disposée dans le manchon 10 pour entourer les extrémités en regard des deux tubes 20 et 22. Cette bague est visible sur la figure 1. La bague 24 est constituée par une bande plate 26, représentée sur les figures 3 à 5, qui est enroulée sur elle-même. Les deux extrémités longitudinales de la bande 26, 26a et 26b, constituent deux bords libres qui, lorsque cette bande est enroulée sur elle-même pour former la bague 24, sont situés en regard l'un de l'autre et sont aptes à venir en contact l'un contre l'autre lorsque, la bague étant disposée à l'intérieur du manchon, ce dernier est serré autour des extrémités des tubes.

Les bords libres 26a et 26b de la bague s'étendent transversalement à la direction longitudinale D de la bande 26. Au voisinage du bord libre 26a, la bague comporte une région 28 dite "région déformable". On voit que cette région s'étend transversalement sur sensiblement la totalité de la largeur *l* de la bande 26. Dans le sens longitudinal de la bande, la région 28 s'étend sur une portion relativement faible de la longueur L de la bande, par exemple comprise entre 3 et 10 % et avantageusement entre 4 et 6 % de la longueur L.

Dans l'exemple représenté, la région déformable 28 équipe seulement le bord libre 26a, ce qui constitue une disposition avantageuse. Toutefois, on pourrait prévoir une région déformable au voisinage de chacun des deux bords libres 26a et 26b.

Dans la région déformable 28, la bague comporte des moyens pour provoquer une déformation consistant en une diminution, dans cette région, de la longueur de la bande 26, lorsque les bords libres 26a et 26b sont sollicités en appui l'un contre l'autre sous l'effet du serrage du manchon 10 sur les extrémités des tubes 20 et 22.

Ainsi, c'est pratiquement uniquement dans la région déformable que se produit cette déformation, la plus grande partie de la bague n'étant pas affectée.

La région déformable s'étendant sur pratiquement toute la largeur *l* de la bande, la déformation peut ne pas être uniforme sur toute cette largeur *l*. Lorsque la bague 24 située à l'intérieur du manchon 10 enserre les extrémités des deux tubes, ces derniers s'étendent sensiblement chacun sur l'une des deux moitiés m1 et m2 de la largeur de la bande qui constitue la bague. Ainsi, si les diamètres externes des deux tubes 20 et 22 sont très légèrement différents, la diminution de longueur dans la région déformable 28 peut être plus importante dans l'une des deux moitiés m1 et m2 que dans l'autre. Du fait de la capacité de la région 28 à se déformer non uniformément sur la totalité de la largeur *l*, l'étanchéité est donc préservée même si les diamètres des deux tubes sont légèrement différents.

La présence de la bague d'étanchéité vise évidemment à créer un espace fermé dans la zone de raccordement des tubes, entre les périphéries externes des tubes et la périphérie interne de la bague d'étanchéité. Toutefois, des fuites risquent tout de même de se produire dans la zone de raccordement des tubes, au niveau de la région déformable de la bague. Pour éviter que ces fuites ne nuisent à l'étanchéité globale du dispositif, celui-ci comporte des moyens pour emprisonner de telles fuites entre au moins une partie de la région déformable de la bague et l'un des deux éléments constitués par la périphérie interne du manchon 10 et par les périphéries externes des tubes 20 et 22. On verra dans la suite que ces moyens peuvent comprendre des replis convenablement disposés dans la région déformable.

Dans le mode de réalisation représenté, les moyens pour provoquer la déformation de la bande dans la région déformable 28 comprennent une série de perforations qui s'étend sur sensiblement la totalité de la largeur *l* de la bande 26. Dans l'exemple représenté, cette série comprend trois perforations 30, 32 et 34 alignées dans le sens transversal de la bande. La perforation centrale 32 est séparée des deux autres par deux zones pleines préservées 36 et 38. La série de perforations peut comprendre davantage de perforations ou, au contraire, n'en comprendre qu'une ou deux. Si plusieurs perforations sont présentes, il est préférable que les zones de séparation entre deux perforations adjacentes, telles que les zones 36 et 38, soient suffisamment peu larges ou suffisamment peu épaisses pour pouvoir se déformer facilement lors du serrage. Les perforations peuvent, comme dans l'exemple représenté, être quadrangulaires, mais elles peuvent également avoir toute forme satisfaisante, par exemple une forme circulaire.

Différents cas de figure sont possibles quant à la position des perforations par rapport à la zone précise de raccordement des extrémités libres des deux tubes. En effet, dans un premier cas de figure, l'une des perforations de la série se trouve dans la zone d'accouplement des extrémités des tubes. Dans l'exemple représenté, c'est le cas de la perforation centrale 32 puisque la zone d'accouplement des extrémités des tubes se trouve sensiblement dans le plan transversal médian P (plan de symétrie) de la bague.

Dans ce cas, les fuites entre les deux extrémités en regard des tubes 20 et 22 risquent évidemment de sortir par la perforation 32. C'est alors entre la partie de la bague voisine de la perforation 32 et la périphérie interne 11 du manchon 10 qu'il convient d'emprisonner ces fuites. A cet effet, une bordure 33 qui est relevée vers l'extérieur de la bague s'étend sur tout le pourtour de l'ouverture 32. Le sens vers l'extérieur est évidemment celui qui s'éloigne du centre géométrique de la bague lorsque la bande est enroulée sur elle-même.

La bordure relevée 33 peut être réalisée dans la même opération que la perforation 32. Lorsque la bague est située à l'intérieur du manchon et lorsque celui-ci est serré sur les tubes, la bordure relevée 33 peut coopérer avec la périphérie interne 11 du manchon. La bordure 33 est relativement souple du fait de la faiblesse de son épaisseur e (par exemple de 5 à 30 % de l'épaisseur de la bande 26). Lorsque, le manchon étant serré autour du tube, la bague est elle-même serrée dans ce manchon, la bordure 33 est donc apte à venir en contact étanche avec la périphérie interne 11 du manchon. Les autres perforations, 30 et 34, peuvent également être munie de bordures analogues à la bordure 33.

Il doit être entendu que la bague 24 est disposée dans le manchon, de telle sorte que les perforations de la série de perforations se trouvent au regard d'une partie pleine du manchon 10, c'est-à-dire qu'elles sont décalées angulairement par rapport à la fente axiale 14.

Ainsi, pour assurer un positionnement correct de la bague dans le manchon, le dispositif comporte avantageusement des moyens pour définir la position de la bague dans le manchon de telle sorte que les bords libres 26a et 26b de cette bague soient angulairement décalés par rapport à la fente axiale 14, comme on le voit mieux sur la loupe de la figure 1. Les perforations se trouvant dans la région déformable, donc à proximité de l'un des bords libres, cette précaution permet de faire en sorte que les perforations soient angulairement décalées par rapport à la fente 14.

De tels moyens de positionnement sont visibles sur les figures 4 et 6. Ils comportent par exemple un embouti 40 réalisé dans la bague et faisant radialement saillie vers l'extérieur de cette dernière. La périphérie du manchon 10 comporte, quant à elle, un renfoncement ou une perforation 42, dans lequel vient se loger l'embouti 40. De préférence, le renfoncement ou la perforation 42 est pratiqué dans une bavette 44 qui s'étend selon la périphérie de l'embout 10 et qui a été préservée lors de la réalisation par repli des lèvres d'assemblage 12a et 12a et de la découpe de l'une des ouvertures 13a et 13b de ces dernières.

Ce premier cas de figure, dans lequel la perforation 32 se trouve dans la zone d'accouplement des extrémités des tubes et est munie de sa bordure 33 relevée vers l'extérieur, constitue une disposition avantageuse puisqu'elle est compatible avec la présence d'une ou plusieurs perforations larges, ce qui confère à la bande une grande capacité à se déformer dans la région 28.

Toutefois, un deuxième cas de figure, illustré par les figures 7 et 8 et dans lequel une telle déformabilité n'est pas requise, peut également être choisi. La bande 126 dont l'extrémité est représentée sur la figure 7 présente une région déformable 128 qui comporte une série de perforations comprenant deux perforations 130 et 132, qui sont séparées par une partie pleine 136. De manière générale, ce deuxième cas de figure est celui où la série de perforations comporte au moins deux perforations séparées par une partie pleine qui est susceptible de se trouver dans la zone d'accouplement des extrémités des tubes lorsque la bague est mise en place à l'intérieur du manchon, lui-même disposé autour des tubes. Dans ce cas, c'est sous la zone 136 que sont susceptibles de se produire des fuites. Pour préserver l'étanchéité du système, ces fuites sont emprisonnées entre la périphérie interne de la bague et les périphéries externes des tubes grâce au fait que les perforations 130 et 132 présentent toutes deux des bordures, respectivement 131 et 133, qui sont retournées vers l'intérieur de la bague et sont ainsi aptes à coopérer avec les périphéries externes des tubes. Ainsi, lorsque le manchon muni de la bague est serré sur les tubes, les bordures 131 et 133 peuvent venir en contact étanche avec les périphéries externes des tubes. Ce contact étanche est d'autant mieux assuré que les bordures 131 et 133 sont relativement déformables du fait de la faiblesse de leur épaisseur respective.

Selon une variante non représentée, les moyens pour permettre la déformation de la bande dans la région déformable peuvent comprendre une série d'au moins une portion amincie, c'est-à-dire une portion dont l'épaisseur, mesurée transversalement au plan de la bande, est inférieure à l'épaisseur de cette bande. De préférence, pour que sa déformabilité soit suffisante, la portion amincie présente une épaisseur comprise entre 10 % et 40 % de l'épaisseur de la bande.

Pour parfaire le contact étanche entre les deux bords libres 26a et 26b de la bague, ceux-ci peuvent être munis, chacun, d'un jonc d'étanchéité, respectivement 48a et 48b. Ainsi, lorsque, sous l'effet du serrage, les bords libres sont sollicités en appui l'un contre l'autre, les joncs 48a et 48b viennent en contact étanche. Ces joncs sont avantageusement constitués par des replis des deux extrémités axiales libres de la bande. Ces replis sont de préférence obliques, c'est-à-dire qu'ils sont orientés par rapport au plan de la bande de manière à aller, chacun, en s'éloignant de l'extrémité longitudinale de la bande dans laquelle ils sont ménagés. On s'assure ainsi qu'ils s'appuient directement l'un contre l'autre lors du contact des bords libres de la bague.

Pour assurer un contact étanche entre les replis 48a et 48b, ces dernier sont moins rigides que la majeure partie de la bague. A cet effet, leur épaisseur e' est inférieure à l'épaisseur E de la bande et avantageusement comprise entre 20 et 60 % de cette épaisseur.

De même, pour assurer globalement un contact étanche entre la bague d'étanchéité et les périphéries externes des tubes, cette bague présente des joncs d'étanchéité 50, 150, disposés sur chacune extrémités axiales de la bague, c'est-à-dire sur chacun des bords longitudinaux de la bande qui constitue cette bague et faisant saillie vers l'intérieur de la bague de manière à coopérer avec les périphéries externes des tubes. Comme ceux des bords libres transversaux 26a et 26b, ces joncs d'étanchéité 50 ou 150 sont constitués par des replis de la bordure de la bague, sur les bords longitudinaux de la bande qui la constitue, s'étendant vers l'intérieur de la bague. De même que celle des replis 48a et 48b, l'épaisseur des replis 50 et 150 est avantageusement nettement inférieure à celle de la bague.

L'ensemble des replis 50 (ou 150), 48a et 48b forme donc un repli continu qui s'étend sur la totalité du pourtour de la bande qui constitue la bague.

Pour caler axialement la bague 26 à l'intérieur du manchon 10, ce dernier présente, sur sa périphérie interne, une zone en creux formant un logement pour la bague. Cette zone en creux est réalisée par un embouti 60 sensiblement annulaire, faisant radialement saillie vers l'extérieur du manchon.

Les emboutis 70, dirigés vers l'intérieur de la bague, servent au calage des extrémités 20 et 22 des tubes, l'une par rapport à l'autre.

## Revendications

1. Dispositif d'accouplement étanche de deux tubes lisses (20, 22) disposés bout à bout ayant sensiblement le même diamètre, le dispositif comprenant un manchon (10) susceptible d'être disposé autour des extrémités en regard des deux tubes, ce manchon présentant deux extrémités libres pourvues de lèvres d'assemblage (12a, 12b) qui délimitent entre elles une fente axiale (14), les lèvres d'assemblage étant aptes à coopérer avec des moyens de serrage du manchon (16, 18) susceptibles de rapprocher lesdites lèvres (12a, 12b) l'une de l'autre, le dispositif comprenant, en outre, une bague d'étanchéité (24) apte à être disposée dans le manchon pour entourer les extrémités en regard des deux tubes,. cette bague étant constituée par une bande plate (26, 126) enroulée sur elle-même et présentant deux bords libres (26a, 26b), situés en regard l'un de l'autre et s'étendant transversalement à la direction longitudinale (D) de la bande (26, 126) constituant cette bague, ces bords libres ayant des surfaces de contact aptes à venir en contact l'une avec l'autre lorsque, la bague (24) étant située dans le manchon (10), ce dernier est serré autour des extrémités en regard des tubes (20,22),
**caractérisé en ce que** les bords libres (26a, 26b) de la bague d'étanchéité forment lesdites surfaces de contact qui s'étendent transversalement à la direction longitudinale (D) de la bande et **en ce que** la bague (24) comporte, au moins dans une région (28, 128) dite "région déformable", située au voisinage de l'un (26a) des bords libres de la bague et s'étendant sur sensiblement la totalité de la largeur (*l*) de la bande (26) qui constitue cette bague, des moyens pour provoquer une déformation consistant en une diminution, dans ladite région déformable, de la longueur (L) de la bande qui constitue la bague, lorsque les bords libres (26a, 26b) de cette dernière sont sollicités en appui l'un contre l'autre sous l'effet du serrage du manchon (10) sur les extrémités des tubes (20, 22).

2. Dispositif selon la revendication 1, **caractérisé en ce qu'**il comporte des moyens pour emprisonner les fuites susceptibles de se produire dans la zone d'accouplement des extrémités (20, 22) des tubes entre au moins une portion de la région déformable (28, 128) de la bague (24) et l'un des deux éléments constitués par la périphérie interne (11) du manchon (10) et par les périphéries externes des tubes (20, 22).

3. Dispositif selon la revendication 1 ou 2, **caractérisé en ce que** la bague d'étanchéité (24) présente, dans la région déformable (28, 128), une série de perforations (30, 32, 34 ; 130, 132) comprenant au moins une perforation.

4. Dispositif selon les revendications 2 et 3, **caractérisé en ce que** la série de perforations (30, 32, 34) comprend une perforation (32) susceptible de se trouver dans la zone d'accouplement des extrémités des tubes (20, 22) et **en ce que** au moins cette perforation (32) présente une bordure (33), relevée vers l'extérieur de la bague et apte à coopérer avec la périphérie interne (11) du manchon (10).

5. Dispositif selon les revendications 2 et 3, **caractérisé en ce que** la série de perforations comprend au moins deux perforations (130, 132) séparées par une partie pleine (136) qui est susceptible de se trouver dans la zone d'accouplement des extrémités des tubes (20, 22) et **en ce que** ces perforations présentent des bordures (131, 133), retournées vers l'intérieur de la bague et aptes à coopérer avec les périphéries externes des tubes (20, 22).

6. Dispositif selon la revendication 1 ou 2, **caractérisé en ce que** la bague d'étanchéité présente, dans la région déformable, une série de portions amincies comprenant au moins une portion amincie.

7. Dispositif selon l'une quelconque des revendications 1 à 6, **caractérisé en ce que** la bague d'étanchéité (24) présente des joncs d'étanchéité (48a, 48b, 50; 150), faisant saillie vers l'intérieur de cette bague et apte à coopérer avec les périphéries externes des tubes (20, 22).

8. Dispositif selon la revendication 7, **caractérisé en ce que** les joncs (48a, 48b, 50 ; 150) sont formés par un repli continu, dirigé vers l'intérieur de la bague (24) et s'étendant sur la totalité du pourtour de la bande (26, 126) qui constitue cette bague.

9. Dispositif selon l'une quelconque des revendications 1 à 8, **caractérisé en ce qu'**il comporte des moyens pour définir la position de la bague (24) dans le manchon (10) de telle sorte que les bords libres (26a, 26b) de cette bague soient angulairement décalés par rapport à la fente axiale (14) du manchon (10).

## Claims

1. Device for the sealed coupling of two plain tubes (20, 22) arranged end to end and having roughly the same diameter, the device comprising a sleeve (10) which can be placed around the facing ends of the two tubes, this sleeve having two free ends provided with assembly lips (12a, 12b) which between them delimit an axial slot (14), the assembly lips being able to collaborate with sleeve-clamping means (16, 18) capable of pulling the said lips (12a, 12b) together, the device further comprising a sealing ring (24) which can be placed inside the sleeve to surround the facing ends of the two tubes, this ring consisting of a flat band (26, 126) wound up on itself and having two free edges (26a, 26b) facing one another and running transversely to the longitudinal direction (D) of the band (26, 126) that forms this ring, these free edges having contacting surfaces able to come into contact with one another when, with the ring (24) located in the sleeve (10), the latter is clamped around the facing ends of the tubes (20, 22),
**characterized in that** the free edges (26a, 26b) of the sealing ring form the said contacting surfaces which run transversely to the longitudinal direction (D) of the band and **in that** the ring (24), at least in one region (28, 128) known as a "deformable region" located near one (26a) of the free edges of the ring and extending over roughly the entire width (*l*) of the band (26) that forms this ring, comprises means for causing deformation consisting in a reduction, in the said deformable region, of the length (L) of the band which forms the ring when the free edges (26a, 26b) thereof are forced against one another under the effect of the clamping of the sleeve (10) onto the ends of the tubes (20, 22).

2. Device according to Claim 1, **characterized in that** it comprises means for trapping leaks that may arise in the region of coupling of the ends (20, 22) of the tubes between at least one portion of the deformable region (28, 128) of the ring (24) and one of the two elements which consist of the interior periphery (11) of the sleeve (10) and of the exterior peripheries of the tubes (20, 22).

3. Device according to Claim 1 or 2, **characterized in that** the sealing ring (24) in the deformable region (28, 128) has a series of perforations (30, 32, 34; 130, 132) comprising at least one perforation.

4. Device according to Claims 2 and 3, **characterized in that** the series of perforations (30, 32, 34) comprises one perforation (32) capable of lying in the region of coupling of the ends of the tubes (20, 22), and **in that** at least this perforation (32) has an edging (33) which is raised towards the outside of the ring and able to collaborate with the interior periphery (11) of the sleeve (10).

5. Device according to Claims 2 and 3, **characterized in that** the series of perforations comprises at least two perforations (130, 132) separated by a solid part (136) which is able to lie in the region of coupling of the ends of the tubes (20, 22) and **in that** these perforations have edgings (131, 133) turned up towards the inside of the ring and able to collaborate with the exterior peripheries of the tubes (20, 22).

6. Device according to Claim 1 or 2, **characterized in that** the sealing ring in the deformable region has a series of thinned portions comprising at' least one thinned portion.

7. Device according to any one of Claims 1 to 6, **characterized in that** the sealing ring (24) has ring seals (48a, 48b, 50; 150) projecting towards the inside of this ring and able to collaborate with the exterior peripheries of the tubes (20, 22).

8. Device according to Claim 7, **characterized in that** the ring seals (48a, 48b, 50 ; 150) are formed by a continuous fold, directed towards the inside of the ring (24) and extending around the entire periphery of the band (26, 126) that forms this ring.

9. Device according to any one of Claims 1 to 8, **characterized in that** it comprises means for defining the position of the ring (24) in the sleeve (10) so that the free edges (26a, 26b) of this ring are angularly offset from the axial slot (14) of the sleeve (10).

## Patentansprüche

1. Vorrichtung zum dichten Verbinden von zwei glatten Rohren (20, 22), die aufeinander folgend angeordnet sind und im wesentlichen denselben Durchmesser haben, wobei die Vorrichtung eine Muffe (10) umfaßt, die um die sich gegenüberliegenden Enden der beiden Rohre angeordnet werden kann, wobei diese Muffe zwei freie Enden aufweist, die mit Montagelippen (12a, 12b) versehen sind, die zwischen sich einen axialen Spalt (14) begrenzen, wobei die Montagelippen mit Mitteln zum Festziehen der Muffe (16, 18) zusammenzuwirken vermögen, durch die diese Lippen sich einander annähern lassen, wobei die Vorrichtung ferner einen Dichtring (24) umfaßt, der in der Muffe angeordnet werden kann, um die sich gegenüberliegenden Enden der Rohre zu umgeben, wobei dieser Ring aus einem eingerollten flachen Band (26, 126) besteht und zwei freie Ränder (26a, 26b) aufweist, die sich gegenüberliegen und sich quer zur Längsrichtung (D) des diesen Ring bildenden Bands (26, 126) erstrecken, wobei die freien Ränder Kontaktflächen aufweisen, die geeignet sind, miteinander in Berührung zu kommen, wenn die Muffe (10) bei in der Muffe liegendem Ring (24) um die sich gegenüberliegenden Enden der Rohre (20, 22) festgezogen wird,
**dadurch gekennzeichnet, daß** die freien Ränder (26a, 26b) des Dichtrings diese Kontaktflächen bilden, die sich quer zur Längsrichtung (D) des Bands erstrecken, und daß der Ring (24) zumindest in einem als "verformbarer Bereich" bezeichneten Bereich (28, 128), der sich in der Nähe eines (26a) der freien Ränder des Rings liegend nahezu über die gesamte Breite (l) des diesen Ring bildenden Bands (26) erstreckt, Mittel zum Bewirken einer Verformung umfaßt, die in dem verformbaren Bereich in einer Verringerung der Länge (L) des den Ring bildenden Bands besteht, wenn dessen freie Ränder (26a, 26b) durch das Festziehen der Muffe (10) auf den Enden der Rohre (20, 22) gegeneinander gedrückt werden.

2. Vorrichtung nach Anspruch 1,
**dadurch gekennzeichnet, daß** sie Mittel zum Umschließen von Undichtigkeiten aufweist, die in dem Verbindungsbereich der Enden (20, 22) der Rohre zwischen wenigstens einem Teil des verformbaren Bereichs (28, 128) des Rings (24) und einem der beiden Elemente auftreten können, die durch den Innenumfang (11) der Muffe (10) und den Außenumfang der Rohre (20, 22) gebildet werden.

3. Vorrichtung nach Anspruch 1 oder 2,
**dadurch gekennzeichnet, daß** der Dichtring (24) in dem verformbaren Bereich (28, 128) eine Serie von Perforierungen (30, 32, 34; 130, 132) mit wenigstens einer Perforierung aufweist.

4. Vorrichtung nach den Ansprüchen 2 und 3,
**dadurch gekennzeichnet, daß** die Serie der Perforierungen (30, 32, 34) eine Perforierung aufweist, die sich in dem Verbindungsbereich der Enden der Rohre (20, 22) befinden soll, und daß wenigstens diese Perforierung (32) einen Rand (33) aufweist, der sich am Ring nach außen erhebt und mit dem Innenumfang (11) der Muffe (10) zusammenwirken kann.

5. Vorrichtung nach den Ansprüchen 2 und 3,
**dadurch gekennzeichnet, daß** die Serie der Perforierungen wenigstens zwei Perforierungen (130, 132) aufweist, die durch ein nicht perforiertes Teil (136) voneinander getrennt sind, welches in dem Verbindungsbereich der Enden der Rohre (20, 22) liegen soll, und daß diese Perforierungen Ränder (131, 133) aufweisen, die zum Inneren des Rings umgeschlagen sind und mit dem Außenumfang der Rohre (20, 22) zusammenwirken können.

6. Vorrichtung nach Anspruch 1 oder 2,
**dadurch gekennzeichnet, daß** der Dichtring in dem verformbaren Bereich eine Serie dünnerer Abschnitte mit wenigstens einem dünneren Abschnitt aufweist.

7. Vorrichtung nach einem der Ansprüche 1 bis 6,
**dadurch gekennzeichnet, daß** der Dichtring (24) Dichtungsleisten (48a, 48b, 50; 150) aufweist, die zum Inneren des Rings vorstehen und mit dem Außenumfang der Rohre (20, 22) zusammenwirken können.

8. Vorrichtung nach Anspruch 7,
**dadurch gekennzeichnet, daß** die Leisten (48a, 48b, 50; 150) durch einen fortlaufenden Umschlag gebildet werden, der zum Inneren des Rings (24) gerichtet ist und sich über den gesamten Umfang des diesen Ring bildenden Bands (26, 126) erstreckt.

9. Vorrichtung nach einem der Ansprüche 1 bis 8,
**dadurch gekennzeichnet, daß** sie Mittel aufweist, die die Lage des Rings (24) in der Muffe (10) so bestimmen, daß die freien Ränder (26a, 26b) dieses Rings bezüglich des axialen Spalts (14) der Muffe (10) winkelmäßig versetzt sind.
